# FASCICULE DE BREVET EUROPEEN

(11) **EP 3 642 055 B1**
(45) Date de publication et mention de la délivrance du brevet: **03.08.2022**
(21) Numéro de dépôt: 18735657.1
(22) Date de dépôt: 01.06.2018
(51) Int. Cl.: B60C 17/00, B60C 23/04

(54) **PNEUMATIQUE ADAPTE POUR ROULAGE A PLAT EQUIPE D'UN ORGANE ELECTRONIQUE**
NOTBETRIEB-FÄHIGER REIFEN MIT INTEGRIETER ELEKTRONIK
TIRE ADAPTED FOR RUNFLAT OPERATION AND EMBEDDING AN ELECTRONIC DEVICE

(30) Priorité: 22.06.2017 FR 1755689
(43) Date de publication de la demande: 29.04.2020
(73) Titulaire: Compagnie Générale des Etablissements Michelin, 63000 Clermont-Ferrand (FR)
(72) Inventeur: GRECO, Mathieu, 63040 Clermont-Ferrand Cedex 9 (FR); GLIBERT, Séverine, 63040 Clermont-Ferrand Cedex 9 (FR); MUHLHOFF, Olivier, 63040 Clermont-Ferrand Cedex 9 (FR)
(74) Mandataire: Roussy, Delphine
(86) Numéro de dépôt international: PCT/FR2018/051273
(87) Numéro de publication internationale: WO 2018/234650

(56) Documents cités:
- EP-A1- 2 186 658
- EP-A2- 1 550 568
- WO-A1-98/54014
- WO-A2-2007/127220
- DE-A1-102008 054 210
- DE-U1-202017 102 186
- FR-A1- 2 925 393
- FR-A1- 2 936 977
- US-A1- 2008 246 588

## Description

### Domaine de l'invention

La présente invention concerne un pneumatique adapté pour le roulage à plat et équipé d'un organe électronique.

### État de la technique

Depuis quelques années, les manufacturiers de pneumatiques cherchent à supprimer la nécessité de la présence d'une roue de secours à bord du véhicule tout en garantissant la possibilité au véhicule de poursuivre sa route malgré une perte importante ou totale de pression d'un ou plusieurs pneumatiques. Cela permet par exemple de se rendre à un point de dépannage sans devoir s'arrêter, dans des circonstances souvent hasardeuses, pour installer la roue de secours.

Une solution envisagée est l'utilisation de pneumatiques adaptés pour un roulage à plat et pourvus de flancs autoporteurs, (parfois désignés par les appellations commerciales en langue anglaise « ZP » pour « zero pressure » ou « SST » pour « self supporting tire »).

On connait de l'état de la technique un pneumatique adapté pour un roulage à plat comportant un sommet comprenant une armature de sommet, formée de deux nappes de sommet d'éléments de renfort et surmontée d'une bande de roulement. Deux flancs prolongent le sommet radialement vers l'intérieur. Ces flancs sont renforcés au moyen d'inserts en caoutchouc permettant de supporter une charge à pression réduite, voire sans pression.

Le pneumatique comporte en outre deux bourrelets comprenant chacun une tringle ainsi qu'une armature de carcasse s'étendant depuis les bourrelets à travers les flancs vers le sommet et comportant au moins une nappe de carcasse d'éléments de renfort. La nappe de carcasse est ancrée à chacun des bourrelets par un retournement autour de la tringle.

Lorsque la pression de gonflage est significativement abaissée par rapport à la pression de service, voire même nulle (on parle alors de mode « roulage à plat »), le pneumatique doit permettre de rouler une distance donnée à une vitesse donnée. Cette performance, dite performance « RME » (Roulage Mode Étendu), est requise par la législation ou par les constructeurs automobiles pour permettre au manufacturier de présenter le pneumatique comme adapté pour le roulage à plat.

Lorsque la pression de gonflage est proche de la pression de service (on parle alors de mode « roulage normal »), il est souhaitable que le pneumatique présente des performances, dites performances « RMG » (Roulage Mode Gonflé), aussi élevées que possible. Ces performances RMG comprennent, entre autres, la masse, la résistance au roulement ou encore le confort.

D'autre part, il est avantageux de munir les pneumatiques d'organes électroniques d'identification qui permettent leur identification et leur suivi pendant leur fabrication, leur stockage, l'ensemble de leur vie et aussi lors de leur rechapage.

Les pneumatiques concernés sont les pneumatiques de tous types pour véhicules poids lourds, de tourisme, génie civil, agricole, avion.

De tels organes électriques peuvent être des transpondeurs radio fréquence ou RFID (Radio Frequency IDentification).

La mise en place de ces organes électroniques doit être très précise pour garantir une bonne communication radio fréquence, une durée de vie acceptable des dispositifs ainsi que pour ne pas pénaliser le fonctionnement ou l'endurance des pneumatiques.

Les conditions particulières d'utilisation des pneumatiques aptes à rouler à plat lors d'un tel roulage à plat rendent particulièrement difficile l'introduction de tels organes électroniques dans ces types de pneumatiques.

Les documents suivants peuvent être cités en qualité d'art antérieur : FR 2 925 393 A1, WO 2007/127220 A2, DE 10 2008 054210 A1, DE 20 2017 102186 U, EP 2 186 658 A1, FR 2 936 977 A1, US 2008/246588 A1, EP 1 550 568 A2, EP 1 550 568 A2.

FR 2 925 393 A1 divulgue plus particulièrement un pneumatique adapté pour un roulage à plat, ledit pneumatique comportant un sommet, deux flancs et deux bourrelets, une armature de carcasse ancrée dans chaque bourrelet et un insert de flanc disposé dans chacun des deux flancs du pneumatique.

### Description brève de l'invention

L'invention a pour objet un pneumatique adapté pour un roulage à plat, le pneumatique comportant un sommet, deux flancs et deux bourrelets, une armature de carcasse ancrée dans chaque bourrelet et un insert de flanc disposé dans chacun des deux flancs axialement intérieurement relativement à l'armature de carcasse. Ce pneumatique est caractérisé en ce qu'il est équipé d'un organe électronique comprenant au moins un transpondeur radiofréquence noyé à l'intérieur de l'un des inserts de flanc.

À l'intérieur de l'insert de flanc, les sollicitations mécaniques sont faibles lors d'un roulage en mode gonflé en raison de la forte rigidité de la gomme caoutchouteuse qui constitue l'insert de flanc. Cela permet d'avoir une bonne tenue en fatigue de l'organe électronique.

Un autre avantage indéniable est que pendant la vie d'un pneumatique en mode normal, gonflé, celui-ci peut subir de nombreux râpages trottoirs. Dans les cas les plus sévères (taxis, ...), le flanc peut même s'user sur 80% de son épaisseur à neuf. Une telle position, à l'intérieur des inserts de flancs, est donc très intéressante, car naturellement protégée des râpages trottoirs. D'autre part, pendant les montées des pneumatiques sur les trottoirs, les flancs subissent des déformations très importantes : ils prennent la forme du trottoir en s'enroulant dessus. Lorsque qu'un trottoir possède un angle vif, avec un rayon de raccordement inférieur à 5mm, si l'organe électronique est situé entre le flanc et l'armature de nappe carcasse, il y a un risque potentiel de le détruire. Un insert de flanc donne un surcroît de rigidité au flanc, et diminue la déformation du flanc lors de la montée d'un trottoir. La meilleure place pour un organe électronique est donc à l'intérieur de l'insert de flanc, plutôt au niveau du bourrelet, et au-dessus du crochet de jante.

Avantageusement, l'insert de flanc étant composé de deux masses de gommes caoutchouteuses circonférentielles et axialement adjacentes, l'organe électronique est placé à l'interface entre les deux masses de gommes de l'insert de flanc.

Le placement à l'interface entre les deux masses de gommes caoutchouteuses qui constituent l'insert de flanc est avantageux car il est aisé de venir positionner l'organe électronique lors de la confection du pneumatique à cette interface.

Avantageusement, chaque bourrelet comportant une tringle de révolution autour d'un axe de référence et H étant un des points de ladite tringle les plus proches de l'axe de révolution, l'organe électronique est placé à une distance radiale supérieure à 20 mm du point H.

Cette position permet de garantir la qualité de la communication électromagnétique vers un récepteur externe au pneumatique. La roue sur laquelle le pneumatique est monté est en général métallique et une position trop proche de celle-ci peut perturber la communication. Il est à noter que la hauteur des crochets de jante usuels est de 17,5 mm et au-delà d'une distance radiale de 20 mm du point H, la perturbation électromagnétique du crochet de jante devient minime.

Selon un mode de réalisation préférentiel, l'organe électronique est placé radialement dans une zone représentant entre 20 et 70 % de la hauteur de section dudit pneumatique.

Très avantageusement, l'organe électronique est placé radialement dans une zone représentant entre 30 et 60 % de la hauteur de section SH du pneumatique.

En raison de la forte rigidité des inserts de flanc, il est possible de mettre en place l'organe électronique dans cette zone du pneumatique. Cette zone permet d'obtenir une communication radio fréquence optimale entre l'organe électronique et un récepteur extérieur.

Avantageusement, l'insert de flanc a une épaisseur maximale comprise entre 6 et 16 mm.

L'organe électronique peut être constitué d'un transpondeur radiofréquence. Il peut aussi être constitué d'un transpondeur radiofréquence encapsulé dans une masse de gomme d'enrobage isolante électriquement.

Il est nécessaire pour un bon fonctionnement radiofréquence de l'antenne rayonnante de l'organe électronique, que cette antenne soit noyée dans une masse de gomme d'enrobage isolante électriquement. On peut ainsi utiliser un semi-fini constitué d'un transpondeur radiofréquence noyé dans une masse de gomme isolante électriquement pour le placer dans la structure du pneumatique lors de sa fabrication à la place choisie.

Mais il est aussi possible de placer directement le transpondeur radiofréquence entre deux mélanges du pneumatique lorsque ceux-ci, en raison de leur formulation, sont isolants électriquement.

De préférence, le module en extension de la masse de gomme d'enrobage est inférieur ou égal au module en extension des mélanges caoutchouteux adjacents.

Selon un autre aspect, la constante diélectrique relative de la masse de gomme d'enrobage est inférieure à la constante diélectrique relative des mélanges caoutchouteux adjacents.

Les transpondeurs radio fréquences comprennent usuellement une puce électronique et une antenne rayonnante apte à communiquer avec un lecteur radiofréquence externe.

Selon un premier mode de réalisation, l'antenne rayonnante comportant deux tronçons d'antennes hélicoïdales, la puce électronique est connectée galvaniquement aux deux tronçons d'antennes hélicoïdales.

Selon un autre mode de réalisation, le transpondeur radiofréquence comprend en plus une antenne primaire connectée électriquement à la puce électronique, dans lequel l'antenne primaire est couplée inductivement à l'antenne rayonnante, et dans lequel l'antenne rayonnante est une antenne dipôle constituée d'un ressort hélicoïdal monobrin.

Ce deuxième mode de réalisation a l'avantage de dissocier mécaniquement l'antenne rayonnante des composants électroniques du transpondeur et ainsi de supprimer le point faible des transpondeurs usuels à savoir la zone de fixation des tronçons d'antenne sur le support de la puce électronique. L'intégration d'un tel organe électronique dans un pneumatique permet de réduire les risques de détérioration de l'organe de par sa structure tout en améliorant la performance de radiocommunication et en minimisant les risques liés à l'intégrité physique du pneumatique.

En effet, la détérioration de l'organe électronique provient généralement de défaillances au niveau des connexions électriques existant entre l'antenne rayonnante de communication et la partie électronique de l'organe. Ici aucune connexion mécanique n'est réalisée puisque le transfert d'énergie entre l'antenne de communication et la puce électronique est fait par champ électromagnétique via une antenne primaire. Or, si la dimension de l'antenne rayonnante, liée à la bande de fréquence de communication et à son fonctionnement en champ lointain, est par nature de grande dimension, l'antenne primaire n'est pas soumise à cette contrainte. De ce fait, elle est de plus petite taille en général permettant de supporter aisément les déformations du pneumatique sans générer de trop fortes contraintes mécaniques au sein de sa jonction galvanique avec la puce électronique. Enfin la nature souple de l'antenne rayonnante limite les risques de détérioration de la zone du pneumatique proche du transpondeur.

En second lieu, l'introduction de l'antenne primaire permet de dissocier des fonctions antagonistes entre dimension de l'antenne rayonnante et impédance électrique de la partie électronique de l'organe. Ainsi, il est possible de dimensionner l'antenne primaire afin d'adapter son impédance électrique à la puce pour minimiser les pertes et améliorer de ce fait la performance énergétique de l'organe électronique. Le dimensionnement de l'antenne rayonnante suit alors le seul critère de la fréquence de communication de l'organe électronique. L'ensemble tend à améliorer la performance de radiocommunication de l'organe électronique.

Selon un mode de réalisation préférentiel, l'antenne rayonnante définissant un premier axe longitudinal, l'antenne primaire est une bobine ayant au moins une spire définissant un deuxième axe longitudinal qui est circonscrite dans un cylindre dont l'axe de révolution est parallèle au deuxième axe longitudinal et dont le diamètre est compris entre le tiers et trois fois, de préférence entre la moitié et deux fois, le diamètre moyen du ressort hélicoïdal de l'antenne rayonnante.

Ainsi, l'antenne primaire étant une antenne boucle, le transfert d'énergie entre l'antenne rayonnante et l'antenne primaire est principalement réalisé par couplage inductif. Cela impose alors une certaine proximité (pour limiter l'entrefer entre les deux antennes) entre les deux antennes nécessitant un dimensionnement de la bobine de l'antenne primaire par rapport à l'antenne rayonnante pour assurer une efficacité de transfert d'énergie suffisante pour avoir la qualité de radiocommunication souhaitée. Concrètement, l'antenne primaire peut avantageusement être de diamètre inférieur à celui de l'antenne rayonnante, dans ce cas l'ensemble de la partie électronique du transpondeur est insérée dans l'antenne rayonnante et l'ensemble est particulièrement robuste dans un environnement tel que celui d'un pneumatique.

L'antenne peut aussi être de diamètre supérieur à celui de l'antenne rayonnante, ce cas est particulièrement avantageux lorsque l'on souhaite ajouter au transpondeur radiofréquence d'autres composants électroniques, actifs ou passifs, pour réaliser des fonctions complémentaires, par exemple de surveillance de l'état du pneumatique.

Selon un mode de réalisation avantageux, l'antenne rayonnante ayant une zone centrale entre deux zones latérales et l'antenne primaire ayant un plan médian perpendiculaire au deuxième axe longitudinal, les premier et deuxième axes longitudinaux sont parallèles entre eux et le plan médian de l'antenne primaire est disposé dans la zone centrale de l'antenne rayonnante.

Ainsi on assure à la fois que la distance entre les antennes rayonnante et primaire est constante le long des axes longitudinaux de ces antennes optimisant ainsi au niveau de chaque élément de longueur de l'antenne primaire un transfert d'énergie équivalent. De plus, le champ magnétique créé par une bobine parcourue par un courant électrique étant maximal au centre de la longueur de la bobine (dans le cas d'une antenne λ/2), il est préférable de placer le plan médian de l'antenne primaire dans la zone centrale de l'antenne rayonnante et plus préférentiellement au centre de celle-ci pour maximiser le champ magnétique à l'origine du couplage inductif.

Préférentiellement, dans le cas de pneumatiques aptes au roulage à plat, l'antenne primaire est disposée à l'intérieur du ressort hélicoïdal monobrin de l'antenne rayonnante.

Il est avantageux, lorsque le pneumatique est directionnel, c'est-à-dire qu'il a un sens de roulage défini, sans avoir de côté intérieur ou extérieur de montage sur un véhicule défini, de disposer un organe électronique dans chacun des deux inserts de flancs. Quel que soit le montage du pneumatique, la communication de l'un des organes électroniques avec un récepteur extérieur sera aisée.

Il est aussi avantageux, lorsque le pneumatique a un côté extérieur E destiné à être placé vers l'extérieur d'un véhicule et un côté intérieur destiné à être placé vers l'intérieur d'un véhicule, de disposer l'organe électronique dans l'insert de flanc du côté extérieur du pneumatique.

Cela permet de faciliter la communication entre l'organe électronique et son transpondeur radio fréquence et un récepteur extérieur.

### Description des Figures

Les différents objets de l'invention seront mieux compris au moyen de la description détaillée qui suit, conjointement avec les figures annexés sur lesquelles les mêmes numéros de référence désignent partout des parties identiques, et dans lesquelles :
- la figure 1 illustre en coupe axiale partielle un pneumatique apte à un roulage à plat et équipé d'un organe électronique ;
- la figure 2 illustre un autre mode de réalisation du pneumatique de la figure 1 ;
- la figure 3 présente un transpondeur radio fréquence usuel ;
- la figure 4 présente une vue éclatée schématique d'un organe électronique selon un deuxième mode de réalisation ;
- la figure 5 présente une vue en perspective d'un transpondeur radiofréquence selon un mode de réalisation de l'invention dans une configuration où la partie électronique est située à l'intérieur de l'antenne rayonnante ;
- la figure 6 présente une vue en perspective d'un transpondeur radiofréquence selon l'invention dans une configuration où la partie électronique est située à l'extérieur de l'antenne rayonnante ;
- la figure 7 présente une vue de détail d'une antenne rayonnante d'un transpondeur radiofréquence selon un mode de réalisation de l'invention ; et
- la figure 8 présente une vue en perspective de la partie électronique d'un transpondeur radiofréquence dans une configuration où la partie électronique est située à l'intérieur de l'antenne rayonnante.

### Description détaillée de l'invention

Dans ce qui suit, les termes « gomme caoutchouteuse », « mélange caoutchouteux », « gomme » et « mélange » sont utilisés de façon équivalente pour identifier des constituants caoutchouteux du pneumatique.

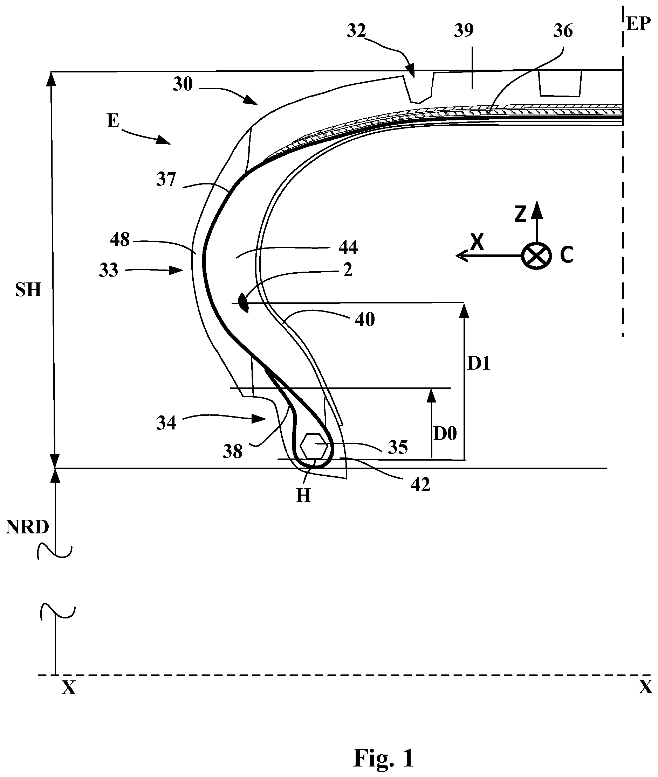

La figure 1 indique les directions axiale X, circonférentielle C et radiale Z ainsi que le plan médian EP (plan perpendiculaire à l'axe de rotation du pneumatique qui est situé à mi-distance des deux bourrelets du pneumatique et passe par le milieu de l'armature de sommet) et l'axe de rotation XX du pneumatique 30.

Cette figure indique aussi la hauteur de section SH du pneumatique, c'est-à-dire la distance radiale entre le diamètre nominal de la jante de montage du pneumatique NRD et la partie radialement la plus extérieure de la bande de roulement du pneumatique. Dans le cadre de cette invention, on prend comme diamètre nominal de la jante de montage du pneumatique, le diamètre du pneumatique tel qu'indiqué par sa dimension.

Dans toutes les figures, le pneumatique est représenté libre, non monté sur une jante et tel que la largeur entre les deux bourrelets est ramenée à la largeur de la jante nominale ETRTO.

En ce qui concerne la direction axiale, on entend par « axialement extérieur » une direction axiale dirigée vers l'extérieur du pneumatique et par « axialement intérieur » une direction axiale dirigée vers le plan médian EP du pneumatique.

Ce pneumatique 30 apte au roulage à plat comporte un sommet 32 renforcé par une armature de sommet ou ceinture 36, un flanc 33 et un bourrelet 34, le bourrelet 34 étant renforcé avec une tringle 35. L'armature de sommet 36 est surmontée radialement extérieurement d'une bande de roulement caoutchouteuse 39. Une armature de carcasse constituée 37 est enroulée autour de la tringle 35 dans le bourrelet 34, le retournement 38 de cette armature 37 étant par exemple disposé vers l'extérieur du pneumatique 30. L'armature de carcasse 37 est de manière connue en soi constituée d'au moins une nappe renforcée par des câbles dits « radiaux », par exemple ici textiles, c'est-à-dire que ces câbles sont disposés pratiquement parallèles les uns aux autres et s'étendent d'un bourrelet à l'autre de manière à former un angle compris entre 80° et 90° avec le plan circonférentiel médian EP. Une couche de gomme intérieure étanche 40 (en anglais « inner liner ») s'étend d'un bourrelet à l'autre radialement intérieurement relativement à l'armature de carcasse 37. Le bourrelet 34 comporte une gomme protectrice (ou « protecteur ») 42 apte à être en contact avec la surface d'une jante. Il comporte aussi une première gomme de bourrage 46 s'étendant radialement extérieurement relativement à la tringle 35.

Le pneumatique 30 est apte à rouler à plat en raison de la présence d'un insert de flanc 44 disposé axialement intérieurement relativement à l'armature de carcasse 37. Cet insert 44 permet à la structure du pneumatique de supporter la charge à pression nulle. L'ordre de grandeur du module d'extension d'une gomme caoutchouteuse d'un insert de flanc est de l'ordre de deux fois la valeur du module d'une gomme de flanc ou plus.

L'insert de flanc 44 de la figure 1 comporte un organe électronique 2 disposé à une distance radiale D1 du point H. Le point H est un des points les plus proches de l'axe de rotation XX. La distance D doit être supérieure à D0 égale à 20 mm pour ne pas pénaliser la qualité de communication entre l'organe électronique et un lecteur externe. Cette distance est supérieure à la hauteur d'un crochet de jante usuel qui est de 17,5 mm.

L'organe électronique 2 est noyé à l'intérieur de l'insert de flanc 44. Compte tenu du module élevé de la gomme caoutchouteuse qui constitue l'insert de flanc, nécessaire pour assurer la portance structurelle du pneumatique et du véhicule en roulage à plat, l'organe électronique n'est que peu sollicité mécaniquement en roulage mode gonflé et ainsi a une durée de vie en service acceptable.

On place de préférence l'organe électronique dans le semi-fini de l'insert de flanc avant son incorporation dans l'ébauche de pneumatique.

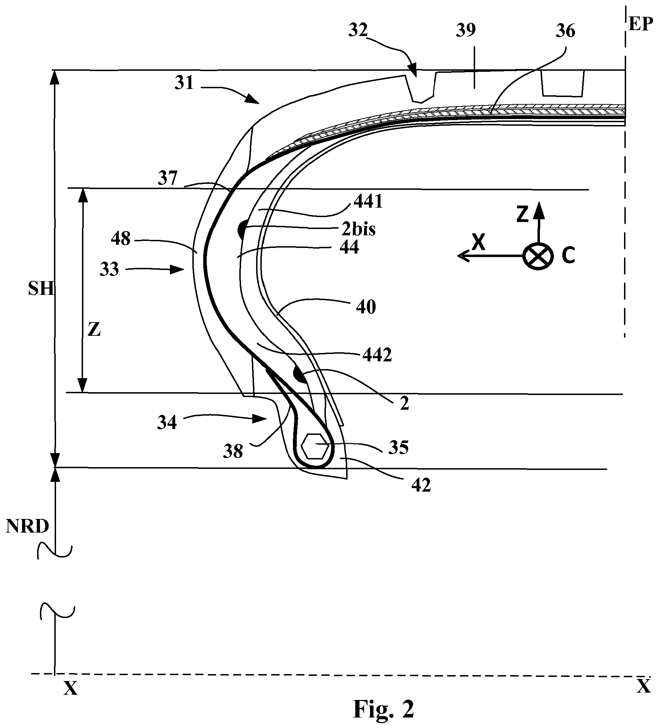

La figure 2, similaire à la figure 1, présente en coupe axiale partielle un pneumatique 31 apte à rouler à plat dont la structure est quasi identique à celle du pneumatique 30 de la figure 1. L'insert de flanc 44, dans cet exemple, est constitué de deux masses de gommes 441 et 442 adjacentes axialement l'une à l'autre et les organes électroniques 2 et 2bis sont placés à l'interface entre les deux gommes 441 et 442.

Ce mode de réalisation facilite la mise en place précise et reproductible des organes électroniques lors de la confection du pneumatique.

La figure 2 illustre la zone Z de la hauteur de section SH du pneumatique dans laquelle il est préférable de positionner les organes électroniques. Cette zone Z s'étend de 20 à 70% de SH. L'organe électronique 2 est placé à environ 25% de SH et l'organe 2bis à 60%.

A la figure 1, l'organe électronique est placé à environ 45 % de SH.

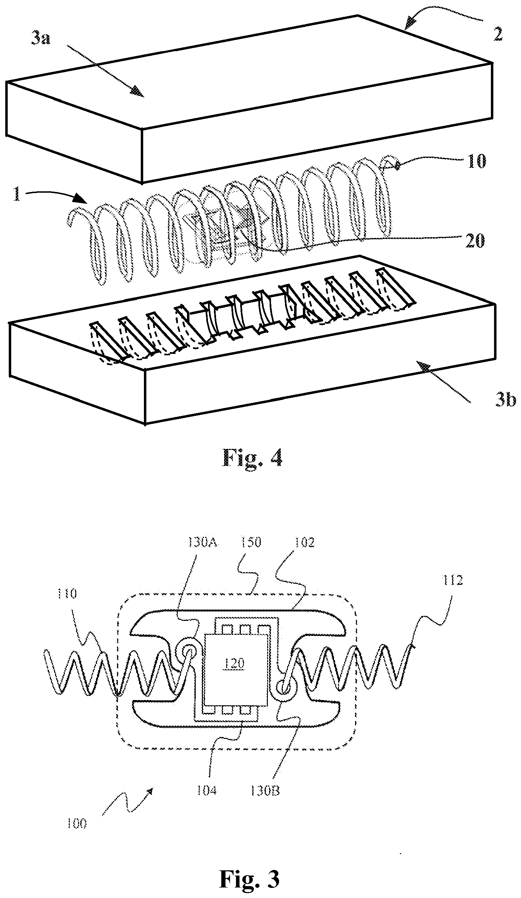

La figure 3 présente un transpondeur radio fréquence usuel tel que présenté dans le document WO2009134243 A1.

La figure 4 présente un éclaté d'un organe électronique 2. Cet organe 2 comprend un transpondeur radiofréquence 1 noyé entre deux couches 3a et 3b d'un mélange élastomère isolant électriquement non-vulcanisé. Un tel organe électronique est un produit semi-fini apte à être intégré dans la structure d'un pneumatique lors de la fabrication de celui-ci.

Le mélange élastomère d'enrobage contient 100 pce (parties pour 100 parties d'élastomère en masse) de polymère tel qu'EPDM (ethylene propylene diene monomer rubber), caoutchouc butyle, néoprène ou d'élastomère diénique tel que SBR (styrene-butadiene rubber), polybutadiène, caoutchouc naturel, ou polyisoprène.

Le mélange peut contenir des charges de type silice, noir de carbone, craie, kaolin :
- avec une charge de type silice à un taux maximum de 50 pce,
- avec une charge de type noir de carbone de grade ASTM supérieur à 700, à un taux inférieur à 50 pce ;
- avec une charge de type noir de carbone de grade inférieur ou égal à 500, a un taux maximum de 20 pce.
- il est possible d'ajouter ou de remplacer ces charges par de la craie ou du kaolin.

De tels taux et types de charges permettent de garantir une permittivité relative inférieure à 6.5, notamment à une fréquence de 915 MHz.

La rigidité à cuit du mélange d'enrobage est de préférence inférieure ou proche de celles des mélanges adjacents.

Dans un premier mode de réalisation, le transpondeur radiofréquence de l'organe électronique 2 est un transpondeur radiofréquence usuel, tel que décrit dans le document WO2009134243A1. Ce transpondeur 100 comprend une puce électronique 120 fixée sur un support ou PCB (printed circuit board) 102 et galvaniquement connectée via des pistes conductrices 104, 130A et 130B à deux demi-antennes 110 et 112. Les antennes sont des ressorts hélicoïdaux à âme en fil d'acier. Le contour 150 fait référence à des couches de gomme caoutchouteuse non-conductrice qui recouvre le PCB, la puce électronique et au moins une partie des deux demi-antennes.

Le transpondeur radiofréquence 1 de l'organe électronique 2 tel que présenté à la figure 4 correspond à un deuxième mode de réalisation de l'organe électronique 2 qui va être décrit maintenant.

Le transpondeur radiofréquence 1 selon le deuxième mode de réalisation de l'organe électronique 2 comprend une puce électronique 22 et une antenne rayonnante 10 apte à communiquer avec un lecteur radiofréquence externe. Il comprend en plus une antenne primaire 24 connectée électriquement à la puce électronique 22 et couplée inductivement à l'antenne rayonnante 10. L'antenne rayonnante est une antenne dipôle constituée d'un ressort hélicoïdal monobrin définissant un premier axe longitudinal.

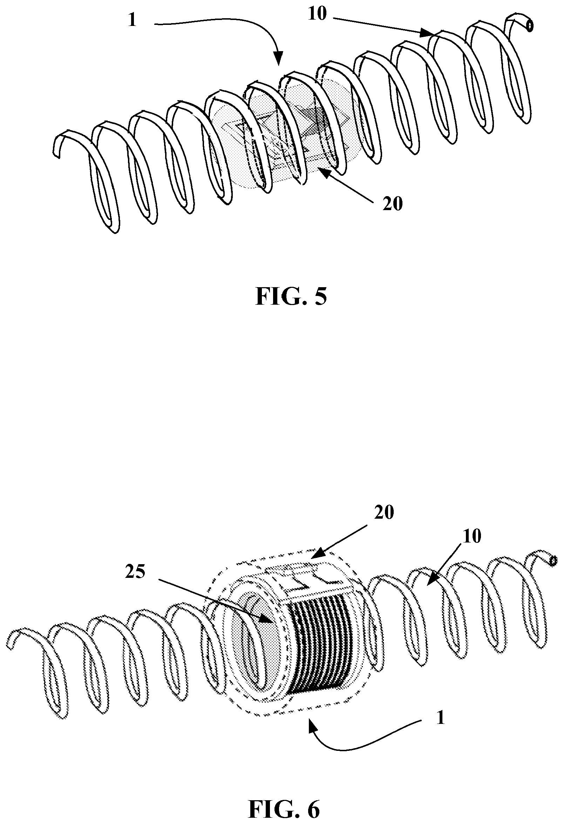

La figure 5 présente un transpondeur radiofréquence 1 dans une configuration où la partie électronique 20 est située à l'intérieur de l'antenne rayonnante 10. La forme géométrique de la partie électronique 20 est circonscrite dans un cylindre dont le diamètre est inférieur ou égal au diamètre intérieur 13 du ressort hélicoïdal 10. L'enfilement de la partie électronique 20 dans l'antenne rayonnante 10 s'en trouve facilité. Le plan médian 21 de l'antenne primaire se trouve dans la zone centrale de l'antenne rayonnante et sensiblement superposé au plan médian 19 de l'antenne rayonnante 10.

La figure 6 présente un transpondeur radiofréquence 1 dans une configuration où la partie électronique 20 se trouve à l'extérieur de l'antenne rayonnante 10. La forme géométrique de la partie électronique 20 présente une cavité cylindrique 25 dont le diamètre est supérieur ou égal au diamètre extérieur 15 de l'antenne rayonnante 10. L'enfilement de l'antenne rayonnante 10 dans la cavité cylindrique 25 de la partie électronique s'en trouve ainsi facilité. Le plan médian 21 de l'antenne primaire se trouve dans la zone centrale de l'antenne rayonnante et sensiblement dans le plan médian 19 de l'antenne rayonnante 10.

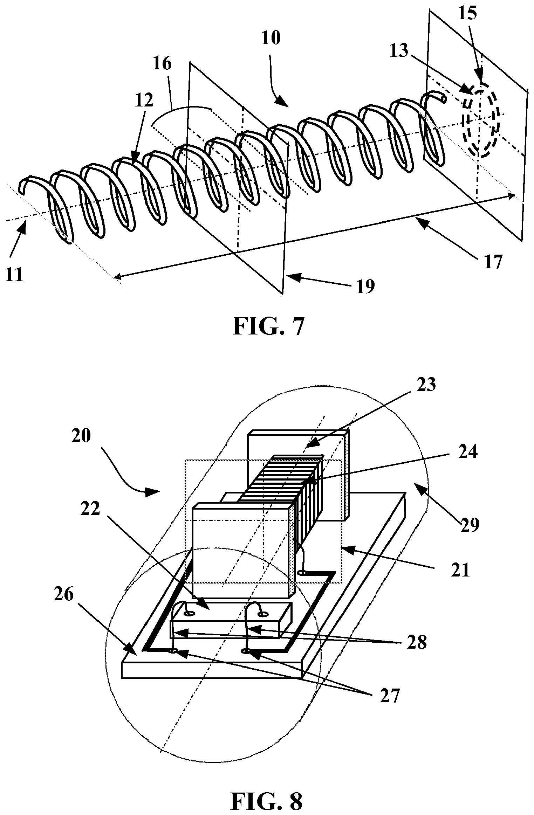

La figure 7 présente une antenne rayonnante 10 constituée d'un fil en acier 12 qui a été déformé plastiquement afin de former un ressort hélicoïdal présentant un axe de révolution 11. Ce fil d'acier est revêtu d'une couche de conduction en cuivre, aluminium, argent, zinc, or ou laiton recouverte si nécessaire d'une couche d'isolation chimique par exemple en laiton, zinc, nickel ou étain pour protéger le mélange caoutchouteux du matériau de la couche de conduction.

La conduction électromagnétique d'une telle antenne s'effectue principalement par un effet de peau, c'est-à-dire qu'elle est principalement assurée dans les couches extérieures de l'antenne. Cette épaisseur de peau est notamment fonction de la fréquence de rayonnement et du matériau constitutif de la couche de conduction. À titre d'exemple, pour une fréquence UHF (par exemple 915 MHz), l'épaisseur de peau est de l'ordre de 2,1 µm pour l'argent, 2,2 µm pour le cuivre, 4,4 µm pour le laiton.

Le fil d'acier peut être revêtu de ces couches puis mis en forme ; alternativement il peut aussi être mis en forme puis revêtu.

Le ressort hélicoïdal est défini tout d'abord par un diamètre d'enroulement du fil revêtu et un pas d'hélice. Ainsi, on détermine précisément des diamètres intérieur 13 et extérieur 15 du ressort hélicoïdal en prenant en compte le diamètre du fil. La longueur 17 du ressort 10 correspond ici à la demi-longueur d'onde du signal de transmission du transpondeur radiofréquence 1 dans une masse caoutchouteuse. Ainsi on peut définir un plan médian 19 au ressort hélicoïdal 10 perpendiculaire à l'axe de révolution 11 séparant l'antenne rayonnante en deux parties égales. Ce plan est au milieu de la zone centrale 16 de l'antenne rayonnante, cette zone centrale 16 correspond environ à 25 % de la longueur totale de l'antenne et de préférence 15 %.

La figure 8 présente la partie électronique 20 d'un transpondeur radiofréquence 1 destiné à une configuration où la partie électronique 20 est située à l'intérieur de l'antenne rayonnante 10. La partie électronique 20 comprend une puce électronique 22 et une antenne primaire 24 connectée électriquement à la puce électronique 22 par l'intermédiaire d'un circuit imprimé 26. L'antenne primaire est ici constituée par une micro bobine CMS (acronyme de Composant Monté en Surface) présentant un axe de symétrie 23. On détermine le plan médian 21 de l'antenne primaire défini par une normale parallèle à l'axe de symétrie 23 de la bobine CMS et séparant la bobine en deux parties égales. La connexion électrique entre les composants sur le circuit imprimé est réalisée à l'aide de pistes en cuivre terminé par des pastilles 27 en cuivre. La connexion électrique des composants sur le circuit imprimé est réalisée à l'aide de la technique dite du « wire bonding » par des fils 28 en or entre le composant et les pastilles 27. L'ensemble constitué du circuit imprimé 26, de la puce électronique 22 de l'antenne primaire 24 est noyé dans une masse rigide 29 en résine époxy haute température isolante électriquement constituant la partie électronique 20 du transpondeur radiofréquence 1.

Ce transpondeur radiofréquence 1 a l'avantage d'être beaucoup plus résistant mécaniquement que les transpondeurs usuels et ainsi est particulièrement adapté à un usage sévère tel que rencontré avec des pneumatiques aptes à rouler à plat.

## Revendications

1. Pneumatique (30, 31) adapté pour un roulage à plat, ledit pneumatique (30, 31) comportant un sommet (32), deux flancs (33) et deux bourrelets (34), une armature de carcasse (37) ancrée dans chaque bourrelet (34) et un insert de flanc (44) disposé dans chacun des deux flancs (33) axialement intérieurement relativement à ladite armature de carcasse (37), **caractérisé en ce que** ledit pneumatique (30, 31) est équipé d'un organe électronique (2) comprenant au moins un transpondeur radiofréquence (1, 100) et **en ce que** ledit organe électronique (2) est noyé à l'intérieur de l'un desdits inserts de flanc (44).

2. Pneumatique (30, 31) selon la revendication 1, dans lequel, ledit insert (44)étant composé de deux masses de gommes (441, 442) circonférentielles et axialement adjacentes, ledit organe électronique (2) est placé à l'interface entre lesdites deux masses de gommes (441, 442) dudit insert de flanc (44).

3. Pneumatique (30, 31) selon l'une des revendications 1 et 2, dans lequel, chaque bourrelet (34) comportant une tringle (35) de révolution autour d'un axe de référence (XX) et H étant un des points de ladite tringle (35) les plus proches dudit axe de référence (XX), ledit organe électronique (2) est placé radialement extérieurement à une distance radiale supérieure à 20 mm dudit point H.

4. Pneumatique (30, 31) selon l'une des revendications 1 à 3, dans lequel ledit organe électronique (2) est placé radialement dans une zone représentant entre 20 et 70 % de la hauteur de section (SH) dudit pneumatique (30, 31).

5. Pneumatique (30, 31) selon la revendication 4, dans lequel ledit organe électronique (2) est placé radialement dans une zone représentant entre 30 et 60 % de la hauteur de section (SH) dudit pneumatique (30, 31).

6. Pneumatique (30, 31) selon l'une quelconque des revendications précédentes, dans lequel l'insert de flanc (44) a une épaisseur maximale comprise entre 6 et 16 mm.

7. Pneumatique (30, 31)selon l'une quelconque des revendications précédentes, dans lequel l'organe électronique (2) est constitué du transpondeur radiofréquence (1, 100).

8. Pneumatique (30, 31) selon l'une quelconque des revendications 1 à 6, dans lequel l'organe électronique (2) est constitué du transpondeur radiofréquence (1, 100) encapsulé dans au moins une masse de gomme d'enrobage isolante électriquement (3a, 3b, 150).

9. Pneumatique (30, 31) selon la revendication 8, dans lequel le module en extension de la masse de gomme d'enrobage (3a, 3b, 150) est inférieur ou égal au module en extension des mélanges caoutchouteux adjacents.

10. Pneumatique (30, 31) selon l'une des revendications 8 et 9, dans lequel la constante diélectrique relative de la masse de gomme d'enrobage (3a, 3b, 150) est inférieure à la constante diélectrique relative des mélanges caoutchouteux adjacents.

11. Pneumatique (30, 31) selon l'une quelconque des revendications précédentes, dans lequel le transpondeur radiofréquence (1, 100) de l'organe électronique (2) comprend une puce électronique (120, 22) et une antenne rayonnante (10) apte à communiquer avec un lecteur radiofréquence externe.

12. Pneumatique (30, 31) selon la revendication 11, dans lequel, ladite antenne rayonnante (10) comportant deux tronçons d'antennes hélicoïdales (110, 112), ladite puce électronique (120) est connectée galvaniquement audits deux tronçons d'antennes hélicoïdales (110, 112).

13. Pneumatique (30, 31) selon la revendication 11, dans lequel le transpondeur radiofréquence (1, 100) de l'organe électronique (2) comprend en plus une antenne primaire (24) connectée électriquement à la puce électronique (22), dans lequel l'antenne primaire (24) est couplée inductivement à l'antenne rayonnante (10), et dans lequel l'antenne rayonnante (10) est une antenne dipôle constituée d'un ressort hélicoïdal monobrin définissant un premier axe longitudinal (11).

14. Pneumatique (30, 31) selon la revendication 13, dans lequel l'antenne primaire (24) est une bobine ayant au moins une spire définissant un deuxième axe longitudinal (23) qui est circonscrite dans un cylindre dont l'axe de révolution est parallèle au deuxième axe longitudinal (23) et dont le diamètre est compris entre le tiers et trois fois, de préférence entre la moitié et deux fois, le diamètre moyen du ressort hélicoïdal de l'antenne rayonnante (10).

15. Pneumatique (30, 31) selon la revendication 14, dans lequel, l'antenne rayonnante (10) ayant une zone centrale entre deux zones latérales et l'antenne primaire (24) ayant un plan médian (21) perpendiculaire au deuxième axe longitudinal (23), lesdits premier et deuxième axes longitudinaux (11, 23) sont parallèles entre eux et ledit plan médian (21) de l'antenne primaire (24) est disposé dans la zone centrale de l'antenne rayonnante (10).

16. Pneumatique (30, 31) selon l'une quelconque des revendications 13 à 15, dans lequel l'antenne primaire (24) est disposée à l'intérieur du ressort hélicoïdal monobrin de l'antenne rayonnante (10).

17. Pneumatique (30, 31) selon l'une quelconque des revendications précédentes, dans lequel, le pneumatique (30, 31) ayant un sens de roulage préférentiel, on dispose un organe électronique (2) dans chacun des deux inserts de flanc (44).

18. Pneumatique (30, 31) selon l'une quelconque des revendications 1 à 16, dans lequel, le pneumatique (30, 31) ayant un côté extérieur et un côté intérieur de montage sur un véhicule, ledit organe électronique (2) est disposé dans l'insert de flanc (44) du côté extérieur du pneumatique (30, 31).

## Patentansprüche

1. Reifen (30, 31), welcher für einen Notlauf geeignet ist, wobei der Reifen (30, 31) einen Scheitel (32), zwei Seitenwände (33) und zwei Wülste (34), eine Karkassenbewehrung (37), die in jedem Wulst (34) verankert ist, und eine Seitenwandeinlage (44), die in jeder der zwei Seitenwände (33) in Bezug auf die Karkassenbewehrung (37) axial innen angeordnet ist, aufweist, **dadurch gekennzeichnet, dass** der Reifen (30, 31) mit einem elektronischen Organ (2) ausgestattet ist, das wenigstens einen Hochfrequenz-Transponder (1, 100) umfasst, und dadurch, dass das elektronische Organ (2) ins Innere einer der Seitenwandeinlagen (44) eingebettet ist.

2. Reifen (30, 31) nach Anspruch 1, wobei, wenn die Einlage (44) aus zwei umlaufenden und axial benachbarten Gummimassen (441, 442) besteht, das elektronische Organ (2) an der Grenzfläche zwischen den zwei Gummimassen (441, 442) der Seitenwandeinlage (44) angeordnet ist.

3. Reifen (30, 31) nach einem der Ansprüche 1 und 2, wobei, wenn jeder Wulst (34) einen Wulstkern (35) aufweist, der ein Rotationskörper um eine Bezugsachse (XX) ist, und H einer der Punkte des Wulstkerns (35) ist, die der Bezugsachse (XX) am nächsten sind, das elektronische Organ (2) radial außen in einem radialen Abstand vom Punkt H angeordnet ist, der größer als 20 mm ist.

4. Reifen (30, 31) nach einem der Ansprüche 1 bis 3, wobei das elektronische Organ (2) radial in einem Bereich angeordnet ist, der zwischen 20 und 70 % der Querschnittshöhe (SH) des Reifens (30, 31) darstellt.

5. Reifen (30, 31) nach Anspruch 4, wobei das elektronische Organ (2) radial in einem Bereich angeordnet ist, der zwischen 30 und 60 % der Querschnittshöhe (SH) des Reifens (30, 31) darstellt.

6. Reifen (30, 31) nach einem der vorhergehenden Ansprüche, wobei Seitenwandeinlage (44) eine maximale Dicke zwischen 6 und 16 mm aufweist.

7. Reifen (30, 31) nach einem der vorhergehenden Ansprüche, wobei das elektronische Organ (2) aus dem Hochfrequenz-Transponder (1, 100) besteht.

8. Reifen (30, 31) nach einem der Ansprüche 1 bis 6, wobei das elektronische Organ (2) aus dem Hochfrequenz-Transponder (1, 100) besteht, der in wenigstens eine elektrisch isolierende umhüllende Gummimasse (3a, 3b, 150) eingekapselt ist.

9. Reifen (30, 31) nach Anspruch 8, wobei der Dehnungsmodul der umhüllenden Gummimasse (3a, 3b, 150) kleiner oder gleich dem Dehnungsmodul der benachbarten Kautschukmischungen ist.

10. Reifen (30, 31) nach einem der Ansprüche 8 und 9, wobei die relative Dielektrizitätskonstante der umhüllenden Gummimasse (3a, 3b, 150) kleiner als die relative Dielektrizitätskonstante der benachbarten Kautschukmischungen ist.

11. Reifen (30, 31) nach einem der vorhergehenden Ansprüche, wobei der Hochfrequenz-Transponder (1, 100) des elektronischen Organs (2) einen Mikrochip (120, 22) und eine strahlende Antenne (10), die geeignet ist, mit einem externen Hochfrequenzleser zu kommunizieren, umfasst.

12. Reifen (30, 31) nach Anspruch 11, wobei, wenn die strahlende Antenne (10) zwei spiralförmige Antennenabschnitte (110, 112) aufweist, der Mikrochip (120) mit den zwei spiralförmigen Antennenabschnitten (110, 112) galvanisch verbunden ist.

13. Reifen (30, 31) nach Anspruch 11, wobei der Hochfrequenz-Transponder (1, 100) des elektronischen Organs (2) außerdem eine primäre Antenne (24) umfasst, die mit dem Mikrochip (22) elektrisch verbunden ist, wobei die primäre Antenne (24) mit der strahlenden Antenne (10) induktiv gekoppelt ist und wobei die strahlende Antenne (10) eine Dipolantenne ist, die aus einer eindrähtigen Spiralfeder besteht, die eine erste Längsachse (11) definiert.

14. Reifen (30, 31) nach Anspruch 13, wobei die primäre Antenne (24) eine Spule mit wenigstens einer eine zweite Längsachse (23) definierenden Windung ist, welche in einen Zylinder einbeschrieben ist, dessen Drehachse parallel zur zweiten Längsachse (23) ist und dessen Durchmesser zwischen einem Drittel und dem Dreifachen, vorzugsweise zwischen der Hälfte und dem Zweifachen, des mittleren Durchmessers der Spiralfeder der strahlenden Antenne (10) beträgt.

15. Reifen (30, 31) nach Anspruch 14, wobei, wenn die strahlende Antenne (10) einen zentralen Bereich zwischen zwei seitlichen Bereichen aufweist und die primäre Antenne (24) eine zur zweiten Längsachse (23) senkrechte Mittelebene (21) aufweist, die erste und die zweite Längsachse (11, 23) parallel zueinander sind und die Mittelebene (21) der primären Antenne (24) im zentralen Bereich der strahlenden Antenne (10) angeordnet ist.

16. Reifen (30, 31) nach einem der Ansprüche 13 bis 15, wobei die primäre Antenne (24) im Inneren der eindrähtigen Spiralfeder der strahlenden Antenne (10) angeordnet ist.

17. Reifen (30, 31) nach einem der vorhergehenden Ansprüche, wobei, wenn der Reifen (30, 31) eine bevorzugte Laufrichtung aufweist, ein elektronisches Organ (2) in jeder der zwei Seitenwandeinlagen (44) angeordnet wird.

18. Reifen (30, 31) nach einem der Ansprüche 1 bis 16, wobei, wenn der Reifen (30, 31) eine Außenseite und eine Innenseite für die Montage am Fahrzeug aufweist, das elektronische Organ (2) in der Seitenwandeinlage (44) der Außenseite des Reifens (30, 31) angeordnet ist.

## Claims

1. Tyre (30, 31) suitable for running flat, said tyre (30, 31) comprising a crown (32), two sidewalls (33) and two beads (34), a carcass reinforcement (37) anchored in each bead (34) and a sidewall insert (44) placed in each of the two sidewalls (33) axially internally relative to said carcass reinforcement (37), **characterized in that** said tyre (30, 31) is equipped with an electronic device (2) comprising at least one radiofrequency transponder (1, 100) and **in that** said electronic device (2) is embedded in one of said sidewall inserts (44).

2. Tyre (30, 31) according to Claim 1, wherein, said insert (44) being composed of two circumferential and axially adjacent rubber masses (441, 442), said electronic device (2) is placed at the interface between said two rubber masses (441, 442) of said sidewall insert (44).

3. Tyre (30, 31) according to one of Claims 1 and 2, wherein, each bead (34) comprising a bead wire (35) of revolution about a reference axis (XX) and H being one of the points of said bead wire (35) closest to said reference axis (XX), said electronic device is placed radially externally at a radial distance larger than 20 mm from said point H.

4. Tyre (30, 31) according to one of Claims 1 to 3, wherein said electronic device (2) is placed radially in a zone representing between 20 and 70% of the section height (SH) of said tyre (30, 31).

5. Tyre (30, 31) according to Claim 4, wherein said electronic device (2) is placed radially in a zone representing between 30 and 60% of the section height (SH) of said tyre (30, 31).

6. Tyre (30, 31) according to any one of the preceding claims, wherein the sidewall insert (44) has a maximum thickness comprised between 6 and 16 mm.

7. Tyre (30, 31) according to any one of the preceding claims, wherein the electronic device (2) consists of the radiofrequency transponder (1, 100).

8. Tyre (30, 31) according to any one of Claims 1 to 6, wherein the electronic device (2) consists of the radiofrequency transponder (1, 100) encapsulated in at least one electrically insulating encapsulating rubber mass (3a, 3b, 150).

9. Tyre (30, 31) according to Claim 8, wherein the elastic modulus of the encapsulating rubber mass (3a, 3b, 150) is lower than or equal to the elastic modulus of the adjacent rubber blends.

10. Tyre (30, 31) according to one of Claims 8 and 9, wherein the relative dielectric constant of the encapsulating rubber mass (3a, 3b, 150) is lower than the relative dielectric constant of the adjacent rubber blends.

11. Tyre (30, 31) according to any one of the preceding claims, wherein the radiofrequency transponder (1, 100) of the electronic device (2) comprises an electronic chip (120, 22) and a radiating antenna (10) able to communicate with an external radiofrequency reader.

12. Tyre (30, 31) according to Claim 11, wherein, said radiating antenna (10) comprising two helical antenna segments (110, 112), said electronic chip (120) is galvanically connected to said two helical antenna segments (110, 112).

13. Tyre (30, 31) according to Claim 11, wherein the radiofrequency transponder (1, 100) of the electronic device (2) in addition comprises a primary antenna (24) electrically connected to the electronic chip (22), wherein the primary antenna (24) is inductively coupled to the radiating antenna (10), and wherein the radiating antenna (10) is a dipole antenna consisting of a single-strand helical spring defining a first longitudinal axis (11).

14. Tyre (30, 31) according to Claim 13, wherein the primary antenna (24) is a coil having at least one turn defining a second longitudinal axis (23) that is circumscribed in a cylinder the axis of revolution of which is parallel to the second longitudinal axis (23) and the diameter of which is comprised between one third and three times, and preferably between half and two times, the average diameter of the helical spring of the radiating antenna (10).

15. Tyre (30, 31) according to Claim 14, wherein, the radiating antenna (10) having a central zone between two lateral zones and the primary antenna (24) having a median plane (21) perpendicular to the second longitudinal axis (23), said first and second longitudinal axes (11, 23) are parallel to each other and said median plane (21) of the primary antenna (24) is placed in the central zone of the radiating antenna (10).

16. Tyre (30, 31) according to any one of Claims 13 to 15, wherein the primary antenna (24) is placed in the interior of the single-strand helical spring of the radiating antenna (10).

17. Tyre (30, 31) according to any one of the preceding claims, wherein, the tyre (30, 31) having a preferential running direction, an electronic device (2) is placed in each of the two sidewall inserts (44).

18. Tyre (30, 31) according to any one of Claims 1 to 16, wherein, the tyre (30, 31) having an outer side and an inner side for mounting on a vehicle, said electronic device (2) is placed in the sidewall insert (44) on the outer side of the tyre (30, 31).
